# DEMANDE DE BREVET EUROPEEN

(11) **EP 1 798 628 A1**
(43) Date de publication de la demande: **20.06.2007**
(21) Numéro de dépôt: 06291700.0
(22) Date de dépôt: 31.10.2006
(51) Int. Cl.: G06F 1/14

(54) **Dispositif multifunctionnel temporisateur/compteur d'événements et procédé de mise en oeuvre d'un tel dispositif**

(30) Priorité: 16.12.2005 FR 0512818
(71) Demandeur: STMicroelectronics SA, 92120 Montrouge (FR)
(72) Inventeur: Link, Jean-François, 13530 Trets (FR); Davidescu, Dragos, 13100 Aix en Provence (FR); Lendre, Sandrine, 83910 Pourrieres (FR)
(74) Mandataire: Bentz, Jean-Paul

(57) **Abrégé**

Dispositif multifonctionnel temporisateur/compteur d'évènements (TIMER) comprenant au moins un compteur (CNT) piloté par un signal d'horloge (CLK), et un registre de contrôle (REG_CTRL) comprenant au moins un nombre binaire destiné à au moins définir un comportement dudit compteur (CNT).

Le dispositif comprend également un module de fonction (MF) comprenant au moins une entrée (TRG) de réception d'un signal de synchronisation et une entrée de réception d'au moins un signal de commande de fonction (TMS), ledit module de fonction (MF) étant apte à modifier ledit nombre binaire en fonction au moins dudit signal de synchronisation et dudit signal de commande de fonction (TMS).

## Description

L'invention concerne, de façon générale, le domaine des circuits multifonctionnels temporisateur/compteur d'évènements, communément appelé « timers » par l'homme du métier.
Plus précisément, l'invention concerne, selon un premier aspect, un dispositif multifonctionnel temporisateur/compteur d'évènements comprenant au moins un compteur et un registre de contrôle comprenant un nombre binaire destiné à au moins définir un comportement du compteur.
L'invention concerne, selon un deuxième aspect, un procédé de mise en oeuvre d'un tel dispositif.

Le dispositif multifonctionnel temporisateur/compteur d'évènements, communément appelé « timer » par l'homme du métier, est un circuit programmable comprenant généralement un compteur binaire associé à un registre de contrôle et à un registre de compteur.

Par souci de simplification et de clarté, le mot « timer » sera par la suite utilisé pour nommer le « dispositif multifonctionnel temporisateur/compteur d'évènements ».

Le registre de contrôle contient un nombre binaire permettant de définir le comportement du compteur du timer. Un comportement du compteur peut par exemple être l'activation du comptage ou du décomptage sur un front montant d'un signal de synchronisation envoyé sur une entrée du timer, l'initialisation du compteur à une valeur, ou encore la réinitialisation du compteur.
Le registre de compteur contient un nombre binaire représentatif de l'état du compteur. Ce nombre binaire peut par exemple indiquer le dépassement de capacité du compteur, le résultat de la comparaison de la valeur du compteur avec une autre valeur, ou encore la valeur du compteur.

Généralement implanté dans un microcontrôleur, le timer est notamment utilisé, par exemple, pour compter, mesurer des évènements, ou générer des signaux de rapport cyclique variable pouvant servir de base de temps.
Le timer permet par exemple d'établir des intervalles de temps pour la transmission de données. Le compteur du timer est piloté par un signal d'horloge délivré, par exemple, par un oscillateur implanté dans le microcontrôleur. La fréquence de ce signal d'horloge peut avoir été divisée au préalable au moyen d'un diviseur également appelé « prescaler » par l'homme du métier.
Utilisé pour compter un nombre d'évènements, le timer est, dans ce cas, rythmé par des signaux représentatifs des évènements à compter envoyés sur une entrée du timer.
En temporisateur à déclenchement périodique, le timer génère des impulsions de fréquence constante mais de rapport cyclique variable, plus connu sous le nom de PWM pour Pulse Width Modulation ou Modulation en largeur d'impulsion, par l'homme du métier.

Pour réaliser ces fonctions, il est parfois nécessaire de synchroniser deux timers disposés, par exemple, sur un même microcontrôleur. Un premier timer, appelé timer maître, est choisi pour fonctionner en mode maître, et un deuxième timer, appelé timer esclave, est choisi pour fonctionner en mode esclave. Dans cette configuration, l'état du compteur du timer maître permet de contrôler le comportement du compteur du timer esclave.

Dans cette optique, certains timers de l'art antérieur comprennent des entrées spécifiques prédéfinies et fixées par le constructeur. Ces entrées spécifiques sont par exemple une entrée d'horloge externe, une entrée de déclenchement compteur, une entrée d'initialisation du compteur, une entrée de capture de la valeur du compteur dans un registre, etc.
Cependant, l'architecture des connexions internes de chaque timer est figée matériellement par le constructeur. Ainsi, un signal envoyé sur l'entrée de déclenchement du timer aura pour unique fonction de déclencher le compteur, et ne peut en aucun cas servir, par exemple, à initialiser le compteur ou à donner l'ordre de capturer la valeur du compteur dans un registre. Il est donc nécessaire d'utiliser deux signaux pour contrôler le déclenchement et l'initialisation du compteur.

L'architecture des microcontrôleurs existants étant également figée matériellement par le constructeur, il n'est généralement pas possible de choisir le signal généré par le timer maître pour contrôler le déclenchement du timer esclave. Par exemple, le compteur du timer esclave ne pourra être uniquement déclenché que sur un dépassement du compteur du timer maître.
De même, si l'on désire contrôler l'horloge du timer esclave avec un signal externe au microcontrôleur, puis un signal avec une sortie du timer maître, il est nécessaire d'utiliser deux entrées d'horloge sur le timer esclave ou de réaliser des câblages supplémentaires en amont du timer esclave.

Dans ce contexte, la présente invention a pour but de proposer un dispositif multifonctionnel temporisateur/compteur d'évènements exempt de l'une au moins des limitations précédemment évoquées.

A cette fin, le dispositif multifonctionnel temporisateur/compteur d'évènements de l'invention, par ailleurs conforme à la définition générique qu'en donne le préambule ci-dessus, est essentiellement caractérisé en ce qu'il comprend également un module de fonction comprenant au moins une entrée de réception d'un signal de synchronisation et une entrée de réception d'au moins un signal de commande de fonction, ledit module de fonction étant apte à modifier ledit nombre binaire en fonction au moins dudit signal de synchronisation et dudit signal de commande de fonction.

Ainsi, grâce à cet agencement, le dispositif offre une souplesse au niveau de l'utilisation de l'entrée de réception du signal de synchronisation. En effet, l'entrée n'est plus uniquement limitée, par exemple, au déclenchement du compteur du dispositif, la commande de fonction permettant d'attribuer un rôle au signal de synchronisation, et ce pendant un même processus. Ainsi, un même signal de synchronisation pourra servir, par exemple, à déclencher le compteur, à initialiser le compteur, à capturer la valeur du compteur, à arrêter le compteur en fonction de l'état du signal de synchronisation, à contrôler la direction de comptage du compteur, à savoir compter ou décompter.

Dans le mode de réalisation préféré de l'invention, le dispositif comprend en outre un premier module de sélection comprenant au moins une pluralité d'entrées, et une entrée de réception d'un premier signal de commande de sélection. Ce premier module de sélection est apte à relier une entrée, parmi ladite pluralité d'entrées dudit premier module de sélection, à ladite entrée de réception d'un signal de synchronisation dudit module de fonction, en fonction dudit premier signal de commande de sélection.

L'ajout de ce premier module de sélection permet au dispositif de recevoir, par exemple, des signaux de fréquences différentes. Ainsi, deux signaux peuvent, par exemple, servir à contrôler le déclenchement du compteur. Chaque comportement du compteur n'est donc plus uniquement lié à une entrée du premier module de sélection.

Il est par exemple possible de prévoir que le dispositif comprend en outre un deuxième module de sélection comprenant au moins une sortie de synchronisation, une pluralité d'entrées de réception de signaux représentatifs, pour certains au moins, d'au moins un état dudit compteur, et de signaux définissant, pour certains au moins, d'au moins ledit comportement dudit compteur, et une entrée de réception d'au moins un deuxième signal de commande de sélection. Ce deuxième module de sélection est apte à relier une entrée, parmi ladite pluralité d'entrées dudit deuxième module de sélection, à ladite sortie de synchronisation, en fonction dudit deuxième signal de commande de sélection.

Avantageusement, le dispositif comprend également un moyen de temporisation apte à générer, à partir dudit nombre binaire et d'un évènement dudit signal d'horloge, un signal définissant au moins ledit comportement dudit compteur.

Ce moyen de temporisation peut par exemple être une bascule de type flip-flop D active sur le front montant du signal d'horloge.

De préférence, le dispositif comprend en outre au moins un premier moyen d'activation dudit module de fonction.

De préférence, le dispositif comprend également au moins un deuxième moyen d'activation dudit premier module de sélection.

L'invention concerne également un microcontrôleur comprenant au moins un dispositif multifonctionnel temporisateur/compteur d'évènements tel que décrit précédemment .

Avantageusement, ledit signal de synchronisation est un signal interne ou externe audit microcontrôleur.

L'invention concerne également un procédé de mise en oeuvre d'un dispositif multifonctionnel temporisateur/compteur d'évènements comprenant au moins un compteur piloté par un signal d'horloge, et un registre de contrôle comprenant au moins un nombre binaire destiné à au moins définir un comportement dudit compteur.
Ce procédé étant caractérisé en ce que selon un premier mode de fonctionnement et pendant au moins un premier cycle d'horloge, un module de fonction exécute des étapes de :
- réception d'un signal de synchronisation,
- réception d'un signal de commande de fonction, et
- modification dudit nombre binaire en fonction dudit signal de synchronisation et dudit signal de commande de fonction.

Dans un premier mode de réalisation possible, selon ledit premier mode de fonctionnement et pendant au moins ledit premier cycle d'horloge, un premier module de sélection exécute des étapes de :
- réception d'une pluralité de signaux de synchronisation,
- réception d'un premier signal de commande de sélection,
- sélection dudit signal de synchronisation parmi ladite pluralité de signaux de synchronisation, en fonction dudit premier signal de commande de sélection, et
- envoi dudit signal de synchronisation vers ledit module de fonction.

Avantageusement, selon un deuxième mode de fonctionnement et pendant au moins ledit premier cycle d'horloge, un deuxième module de sélection exécute des étapes de :
- réception d'une pluralité de signaux représentatifs, pour certains au moins, d'un état dudit compteur, et d'une pluralité de signaux définissant, pour certains au moins, ledit comportement dudit compteur,
- réception d'un deuxième signal de commande de sélection,
- sélection d'un signal parmi ladite pluralité de signaux, en fonction dudit deuxième signal de commande de sélection, et
- envoi dudit signal sélectionnée vers une sortie de synchronisation dudit deuxième module de sélection.

Avantageusement, pendant au moins un deuxième cycle d'horloge et à partir d'un évènement dudit signal d'horloge, ledit compteur exécute ledit comportement défini par ledit nombre binaire.

Le procédé peut également comprendre une étape d'activation dudit premier mode de fonctionnement.

Le procédé peut également comprendre une étape d'activation dudit deuxième mode de fonctionnement.

Selon un deuxième mode de réalisation particulière de l'invention, ledit signal de synchronisation est un signal représentatif d'au moins un état d'un compteur d'un deuxième dispositif multifonctionnel temporisateur/compteur d'évènements ou un signal définissant au moins un comportement dudit compteur dudit deuxième dispositif.

Avantageusement, ladite pluralité de signaux de synchronisation comprend au moins un signal représentatif d'au moins un état d'un compteur d'un deuxième dispositif multifonctionnel temporisateur/compteur d'évènements ou un signal définissant au moins un comportement dudit compteur dudit deuxième dispositif.

De préférence, pendant au moins un deuxième cycle d'horloge et à partir d'un évènement dudit signal d'horloge, ledit compteur dudit premier dispositif exécute ledit comportement défini par ledit premier nombre binaire, et ledit compteur dudit deuxième dispositif exécute un comportement défini par un deuxième nombre binaire contenu dans un registre de contrôle dudit deuxième dispositif.

Dans ce deuxième mode de réalisation, le procédé peut comprendre une étape d'activation dudit premier mode de fonctionnement.

Dans ce deuxième mode de réalisation, le procédé peut comprendre une étape d'activation dudit deuxième mode de fonctionnement.

Avantageusement, un module de fonction dudit deuxième dispositif reçoit un signal représentatif dudit état dudit compteur dudit premier dispositif ou un signal définissant ledit comportement dudit compteur dudit premier dispositif.

De préférence, un premier module de sélection dudit deuxième dispositif reçoit un signal représentatif d'un état dudit compteur dudit premier dispositif ou un signal définissant ledit comportement dudit compteur dudit premier dispositif.

D'autres caractéristiques et avantages de l'invention ressortiront clairement de la description suivante d'un mode de réalisation préférée de l'invention, qui en est faite ci-après, à titre indicatif et nullement limitatif, en référence aux dessins annexés, dans lesquels :
- la figure 1 présente sous la forme d'un schéma bloc et dans une réalisation particulière, un dispositif temporisateur/compteur d'évènements selon l'invention ;
- la figure 2 présente sous la forme d'un schéma bloc et dans une application particulière, deux dispositifs temporisateur/compteur d'évènements, l'un utilisé selon un premier mode de fonctionnement, et l'autre utilisé selon un deuxième mode de fonctionnement,
- la figure 3 présente un chronogramme des signaux des dispositifs de la figure 2, et
- la figure 4, présente quatre dispositifs selon l'invention agencés pour former un réseau.

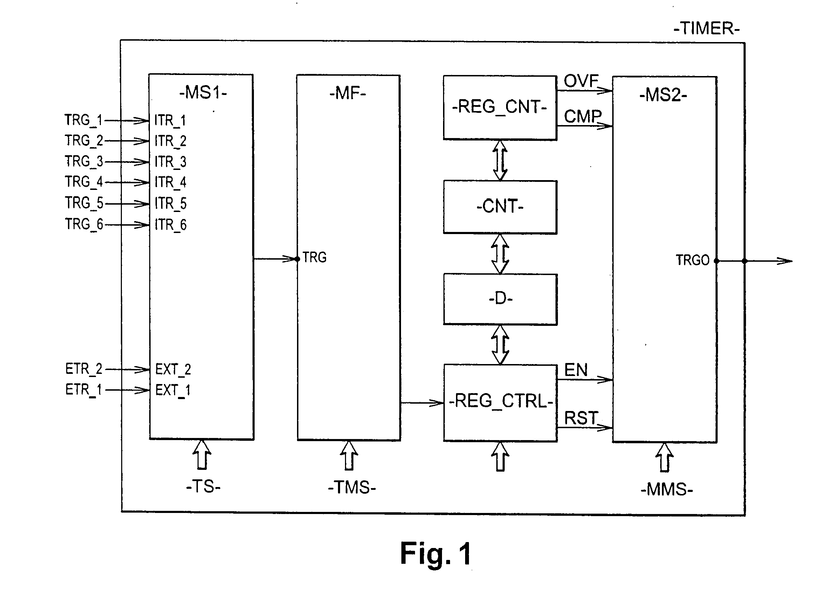

La figure 1 présente, sous forme d'un schéma bloc et dans une réalisation particulière de l'invention, le dispositif temporisateur/compteur d'évènements.

Le dispositif multifonctionnel temporisateur/compteur d'évènements (TIMER), placé par exemple sur une puce à microcontrôleur comprend un compteur (CNT) piloté par un signal d'horloge (CLK), un registre de contrôle (REG_CTRL) comprenant un nombre binaire destiné à définir un comportement du compteur (CNT) et un registre de compteur (REG_CNT) contenant un nombre binaire représentatif de l'état du compteur. Ce dispositif (TIMER) comprend également un module de fonction (MF), un premier et un deuxième module de sélection (MS1, MS2), et un moyen de temporisation (D).

Le module de fonction (MF) comprend une entrée (TRG) de réception d'un signal logique de synchronisation et une entrée de réception d'au moins un signal de commande de fonction (TMS), et est apte à modifier le nombre binaire en tenant compte du signal de synchronisation et du signal de commande de fonction (TMS).
Le signal de commande de fonction (TMS) peut, par exemple, consister en un ensemble de bits de commande de fonction défini par exemple comme suit :
- 000 :: réinitialisation du compteur sur un front montant du signal de synchronisation ;
- 001 :: cadencement du compteur par le signal de synchronisation ;
- 010 :: déclenchement du compteur lorsque le signal de synchronisation est au niveau haut, et arrêt du compteur lorsque le signal de synchronisation est au niveau bas ;
- 011 :: déclenchement du compteur sur un front montant du signal de synchronisation, l'arrêt du compteur n'étant pas contrôlé ;
- 100 :: décomptage par le compteur lorsque le signal de synchronisation est au niveau haut et comptage lorsque le signal de synchronisation est au niveau bas ;
et en un ensemble de bits d'activation du module de fonction (MF) défini comme suit :
- 0 :: le module de fonction (MF) est désactivé ;
- 1 :: le module de fonction (MF) est actif, et le comportement du compteur est contrôlé par le signal de synchronisation.

Les bits de commande de fonction et les bits d'activation du module de fonction (MF) sont, par exemple, envoyés au module de fonction (MF) par programmation.

Ainsi, lors de l'envoi des bits d'activation 1 et des bits de commande de fonction 000 au module de fonction (MF), celui-ci modifie le nombre binaire contenu dans le registre de contrôle (REG_CTRL) en tenant compte du signal de synchronisation, afin que le compteur (CNT) se réinitialise sur un front montant de ce signal de synchronisation.
En envoyant le même signal de synchronisation et les bits de commande de fonction 011 au module de fonction (MF), celui-ci modifie à nouveau le nombre binaire contenu dans le registre de contrôle (REG_CTRL) en fonction de l'état du signal de synchronisation afin que le compteur se déclenche sur un front montant du signal de synchronisation.

Le premier module de sélection (MS1) comprend une pluralité d'entrées, et une entrée de réception d'un premier signal de commande de sélection (TS). Ce premier module de sélection (MS1) est apte à relier une entrée, choisie parmi la pluralité d'entrées de ce premier module de sélection (MS1), à l'entrée (TRG) de réception d'un signal de synchronisation du module de fonction (MF), en fonction du premier signal de commande de sélection (TS).
La pluralité d'entrées du premier module de sélection (MS1) peut par exemple consister en huit entrées (ITR_1, ITR_2, ITR_3, ITR_4, ITR_5, ITR_6, EXT_1, EXT_2), les six premières entrées étant destinées à recevoir six signaux internes au microcontrôleur et les deux entrées restantes étant destinées à recevoir deux signaux externes au microcontrôleur.
Le premier signal de commande de sélection (TS) peut, par exemple, consister en un premier ensemble de bits de commande de sélection défini par exemple comme suit :
- 000 :: sélection de la première entrée (ITR_1) ;
- 001 :: sélection de la deuxième entrée (ITR_2) ;
- 010 :: sélection de la troisième entrée (ITR_3) ;
- 011 :: sélection de la quatrième entrée (ITR_4) ;
- 100 :: sélection de la cinquième entrée (ITR_5) ;
- 101 :: sélection de la sixième entrée (ITR_6) ;
- 110 :: sélection de la septième entrée (EXT_1) ;
- 111 :: sélection de la huitième entrée (EXT_2) ;

Les bits de commande de sélection sont, par exemple, envoyés au premier module de sélection (MF) par programmation.

Le deuxième module de sélection (MS2) comprend une sortie de synchronisation (TRGO), plusieurs entrées de réception de signaux représentatifs des états du compteur (CNT) et de signaux définissant les comportements du compteur (CNT), et une entrée de réception d'au moins un deuxième signal de commande de sélection (MMS).
Ce deuxième module de sélection (MS2) est apte à relier une entrée, parmi la pluralité d'entrées de ce deuxième module de sélection (MS2), à la sortie de synchronisation (TRGO), en fonction du deuxième signal de commande de sélection (MMS).
La pluralité d'entrées reçoit par exemple un signal de dépassement de capacité (OVF) du compteur (CNT), un signal de comparaison (CMP) représentatif du résultat de la comparaison entre la valeur du compteur (CNT) et une autre valeur enregistrée dans le registre de compteur (REG_CNT), un signal de déclenchement (EN) du compteur et un signal de réinitialisation (RST) du compteur.
Le deuxième signal de commande de sélection (MMS) peut, par exemple, consister en un deuxième ensemble de bits de commande de sélection définis par exemple comme suit :
- 000 :: activation du deuxième module de sélection (MMS) ;
- 001 :: envoi du signal de réinitialisation (RST) vers la sortie de synchronisation (TRGO) ;
- 010 :: envoi du signal de déclenchement (EN) du compteur vers la sortie de synchronisation (TRGO) ;
- 011 :: envoi du signal de dépassement de capacité (OVF) vers la sortie de synchronisation (TRGO) ;
- 100 :: envoi du signal de comparaison (CMP) vers la sortie de synchronisation (TRGO) ;

Le deuxième ensemble de bits de commande de sélection est, par exemple, envoyé au deuxième module de sélection (MS2) par programmation.

Le moyen de temporisation (D) peut, par exemple, consister en un ensemble de bascules de type flip-flop, connues de l'homme du métier, pilotées par le signal d'horloge (CLK) et actives sur un front montant du signal d'horloge (CLK).
Si pendant un premier cycle d'horloge le nombre binaire dans le registre de contrôle (REG_CTRL) est modifié pour que le compteur (CNT) adopte un nouveau comportement, par exemple déclenchement du comptage, ce nouveau comportement ne sera pris en compte par le compteur (CNT) qu'au cycle d'horloge suivant.

Le dispositif peut fonctionner selon deux modes de fonctionnement (MASTER, SLAVE):
- le premier mode de fonctionnement (MASTER) est activé par envoi du deuxième ensemble de bits de commande de sélection 000 au deuxième module de sélection (MS2), et
- le deuxième mode de fonctionnement (SLAVE) est activé par envoi des bits d'activation 1 au module de fonction (MF).

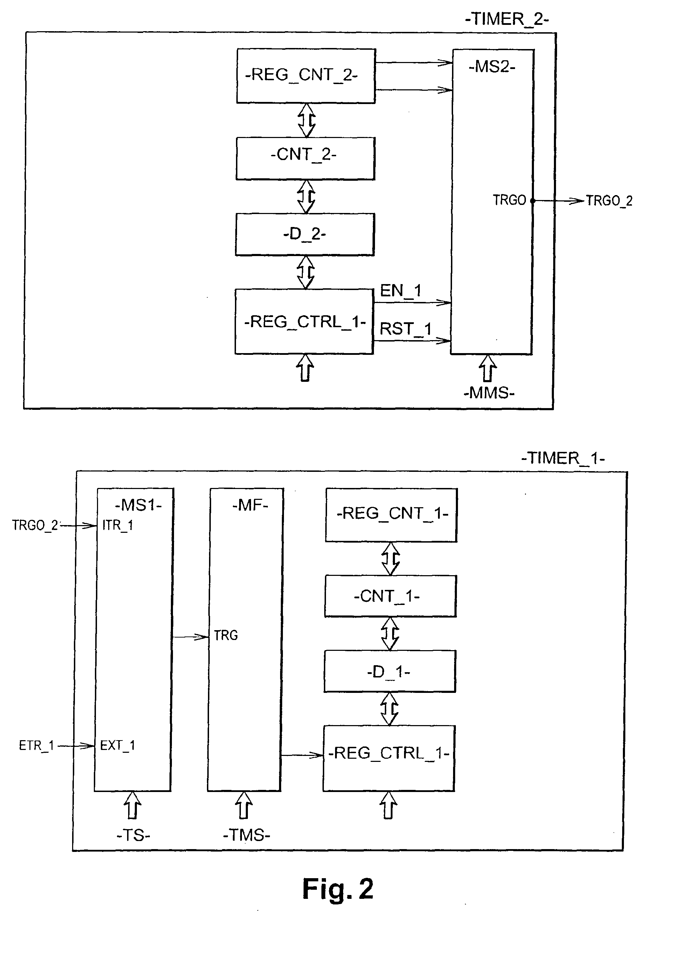

La figure 2 présente, sous la forme d'un schéma bloc et dans une application particulière, deux dispositifs temporisateur/compteur d'évènements (TIMER_1, TIMER_2), le premier dispositif (TIMER_1) fonctionnant selon le premier mode de fonctionnement (SLAVE) et le deuxième dispositif (TIMER_2) fonctionnant selon le deuxième mode de fonctionnement (MASTER).

Pour des raisons de clarté, n'a été représenté, sur le premier dispositif, que les éléments nécessaires à la compréhension du premier mode de fonctionnement (SLAVE), et sur le deuxième dispositif que les éléments nécessaires à la compréhension du deuxième mode de fonctionnement (MASTER).

De même, par souci de clarté et de simplification, nous nommerons :
- premier et deuxième compteur (CNT_1, CNT_2) respectivement le compteur du premier dispositif (TIMER_1) et le compteur du deuxième dispositif (TIMER_2) ;
- premier et deuxième registre compteur (REG_CNT_1, REG_CNT_2) respectivement le registre compteur du premier dispositif (TIMER_1) et le registre compteur du deuxième dispositif (TIMER_2) ;
- premier et deuxième moyen de temporisation (D_1, D_2) respectivement le moyen de temporisation du premier dispositif (TIMER_1) et le moyen de temporisation du deuxième dispositif (TIMER_2) ;
- premier et deuxième registre de contrôle (REG_CTRL_1, REG_CTRL_2) respectivement le registre de contrôle du premier dispositif (TIMER_1) et le registre de contrôle du deuxième dispositif (TIMER_2) ;

Dans cette application particulière, la sortie de synchronisation (TRGO) du deuxième dispositif (TIMER_2) est connectée à la première entrée (ITR_1) du premier module de sélection (MS1) du premier dispositif (TIMER_1). Cette configuration permet, par exemple, de déclencher les compteurs des deux dispositifs (TIMER_1, TIMER_2) pendant un même cycle d'horloge.

Pour cela, il suffit :
- d'envoyer au deuxième module de sélection (MS2) du deuxième dispositif (TIMER_2) le signal de commande de sélection (MMS) comprenant le deuxième ensemble de bits de commande de sélection défini par les bits 010, afin d'envoyer le signal de déclenchement (EN) du deuxième compteur (CNT_2) vers la sortie de synchronisation (TRGO) du deuxième dispositif (TIMER_2) ;
- d'envoyer au premier module de sélection (MS1) du premier dispositif (TIMER_1) le premier signal de commande de sélection (TS) comprenant le premier ensemble de bits de commande de sélection défini par les bits 000, afin de relier la première entrée (ITR_1) du premier module de sélection (MS1) à l'entrée (TRG) de réception d'un signal de synchronisation du module de fonction (MF) du deuxième dispositif (TIMER_2) ;
- d'envoyer au module de fonction (MF) du deuxième dispositif (TIMER_2) le signal de commande de fonction (TMS) comprenant les bits d'activation 1 et les bits de commande de fonction 011.
   La sortie de synchronisation (TRGO) étant connectée à la première entrée du premier module de sélection (MS1) du premier dispositif (TIMER_1), le signal de déclenchement (EN) servira également à déclencher le premier compteur (CNT_1).
   Ce signal de déclenchement est donc le signal de synchronisation des deux dispositifs (TIMER_1, TIMER_2).

La modification, par programmation directe, du nombre binaire contenu dans le deuxième registre de contrôle (REG_CTRL_2) permet de déclencher le premier et deuxième compteur (CNT_1, CNT_2).pendant un même cycle d'horloge.

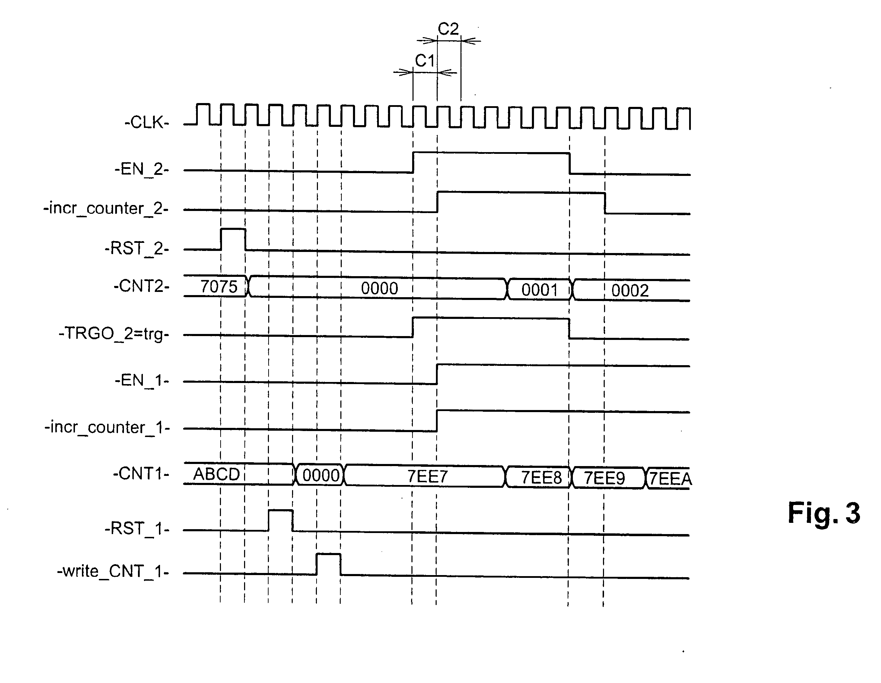

La figure 3, présente un chronogramme des signaux illustrant le fonctionnement des dispositifs dans cette application particulière.

CLK est le signal d'horloge pilotant les compteurs.
RST_1 et RST_2 sont respectivement le signal de remise à zéro du premier compteur (CNT_1) et du deuxième compteur (CNT_2).
EN_1 et EN_2 représentent respectivement le signal de déclenchement du premier compteur (CNT_1) et du deuxième compteur (CNT_2) envoyé respectivement au premier registre de contrôle (REG_CTRL_1) et au deuxième registre de contrôle (REG_CTRL_2).
CNT1 et CNT2 représentent respectivement la valeur du premier compteur (CNT_1) et du compteur du deuxième dispositif (TIMER_2).
INCR₋COUNTER₋1 et INCR_COUNTER_2 représentent respectivement le signal donnant l'ordre de début de comptage au premier compteur (CNT_1) et le signal donnant l'ordre de début de comptage au deuxième compteur (CNT_2), générés respectivement par le premier moyen de temporisation (D_1) et le deuxième moyen de temporisation (D_2).
TRGO_2 représente le signal à la sortie de synchronisation du deuxième module de sélection (MS2) du deuxième dispositif (TIMER_2).
TRG représente le signal à l'entrée du premier module de sélection (MS1) du premier dispositif (TIMER_1).
WRITE_CNT_1 représente le signal de positionnement de la valeur du premier compteur (CNT_1).

Tout d'abord, le deuxième compteur (CNT_2) est remis à zéro lorsque RST_2 est au niveau haut.
De même, le premier compteur (CNT_1) est remis à zéro lorsque RST_1 est au niveau haut.

Le premier compteur (CNT_1) est ensuite initialisé avec la valeur 32487, soit 7EE7 en notation hexadécimale, lorsque WRITE_CNT_1 est au niveau haut.

Pendant au moins un premier cycle d'horloge (C1), EN_2 est mis au niveau haut, et est envoyé, par l'intermédiaire du deuxième registre de contrôle (REG_CTRL_2), au deuxième moyen de temporisation (D_2) piloté par le même signal d'horloge (CLK).
Pendant ce même premier cycle d'horloge (C1), EN_2 est envoyé sur la sortie de synchronisation (TRGO) du deuxième dispositif (TIMER 2). Cette sortie de synchronisation (TRGO) étant connectée à la première entrée (ITR_1) du premier module de sélection (MS1) du premier dispositif (TIMER_1), EN_2 est envoyé sur l'entrée (TRG) de réception d'un signal de synchronisation du module de fonction (MF) du premier dispositif (TIMER_1).
Toujours pendant ce même premier cycle d'horloge (C1), le nombre binaire du premier registre de contrôle (REG_CTRL_1) est alors modifié. Le premier moyen de temporisation (D_1), piloté par le même signal d'horloge (CLK), reçoit le signal EN_2.

Pendant un deuxième cycle d'horloge (C2) et sur un front montant du signal d'horloge (CLK), le premier moyen de temporisation (D_1) et le deuxième moyen de temporisation (D_2) génèrent respectivement les signaux INCR_COUNTER_1 et INCR_COUNTER_2, identiques au signal EN_2. Pendant ce même deuxième cycle d'horloge (C2), ces signaux INCR_COUNTER_1 et INCR_COUNTER_2 sont respectivement envoyés au premier compteur (CNT_1) et deuxième compteur (CNT_2). Ainsi, les premier et deuxième compteurs sont déclenchés pendant ce même deuxième cycle d'horloge (C2).

La synchronisation des deux dispositifs (TIMER_1, TIMER_2) permet, par exemple en positionnant les valeurs initiales des deux compteurs et en configurant les valeurs de comparaison dans les registres, de construire deux signaux logiques de type PWM de fréquences différentes mais de rapport entier, ou deux signaux logiques de type PWM déphasés entre eux et de fréquences identiques.

Il est également possible de reboucler la sortie de synchronisation (TRGO) du module de fonction (MF) du premier dispositif (TIMER_1) sur une entrée du premier module de sélection (MS1) du deuxième dispositif (TIMER_2).
Ainsi, pendant un même processus, chaque dispositif pourra fonctionner selon le premier mode de fonctionnement (SLAVE), puis selon le deuxième mode de fonctionnement (MASTER).
L'invention permet ainsi de limiter le nombre de connections entre plusieurs dispositifs, et offre une flexibilité de configuration des dispositifs

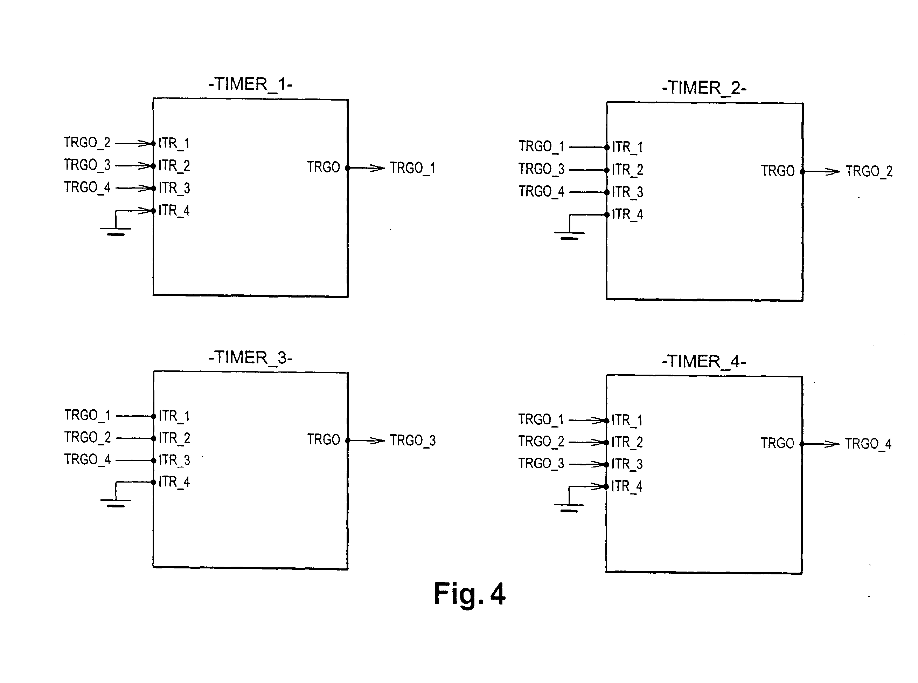

Il est ainsi possible de réaliser un réseau de timers comme présenté sur la figure 4, chaque dispositif peut contrôler les autres dispositifs et être contrôlé par les autres dispositifs. Dans cette configuration il est ainsi possible de construire de très larges diviseurs de fréquences.

## Revendications

1. Dispositif multifonctionnel temporisateur/compteur d'évènements (TIMER) comprenant au moins :
- un compteur (CNT) piloté par un signal d'horloge (CLK),
- un registre de compteur (REG_CNT) contenant un nombre binaire représentatif d'un état dudit compteur, et
- un registre de contrôle (REG_CTRL) comprenant au moins un nombre binaire destiné à au moins définir un comportement dudit compteur (CNT),
**caractérisé en ce qu'**il comprend également un module de fonction (MF) comprenant au moins une entrée (TRG) de réception d'un signal de synchronisation et une entrée de réception d'au moins un signal de commande de fonction (TMS), ledit module de fonction (MF) étant apte à modifier ledit nombre binaire en fonction au moins dudit signal de synchronisation et dudit signal de commande de fonction (TMS), le signal de synchronisation servant au moins à cadencer ou à déclencher le compteur (CNT).

2. Dispositif selon la revendication 1, comprenant en outre un premier module de sélection (MS1) comprenant au moins :
- une pluralité d'entrées, et
- une entrée de réception d'un premier signal de commande de sélection (TS),
ledit premier module de sélection (MS1) étant apte à relier une entrée, parmi ladite pluralité d'entrées dudit premier module de sélection (MS1), à ladite entrée (TRG) de réception d'un signal de synchronisation dudit module de fonction (MF), en fonction dudit premier signal de commande de sélection (TS).

3. Dispositif selon la revendication 1 ou 2, comprenant en outre un deuxième module de sélection (MS2) comprenant au moins:
- une sortie de synchronisation (TRGO),
- une pluralité d'entrées de réception de signaux représentatifs, pour certains au moins, d'au moins un état dudit compteur (CNT), et de signaux définissant, pour certains au moins, d'au moins ledit comportement dudit compteur (CNT), et
- une entrée de réception d'au moins un deuxième signal de commande de sélection (MMS),
ledit deuxième module de sélection (MS2) étant apte à relier une entrée, parmi ladite pluralité d'entrées dudit deuxième module de sélection (MS2), à ladite sortie de synchronisation (TRGO), en fonction dudit deuxième signal de commande de sélection (MMS).

4. Dispositif selon l'une des revendications 1 à 3, comprenant également un moyen de temporisation (D) apte à générer, à partir dudit nombre binaire et d'un évènement dudit signal d'horloge (CLK), un signal définissant au moins ledit comportement dudit compteur (CNT).

5. Dispositif selon l'une des revendications 1 à 4, comprenant en outre au moins un premier moyen d'activation dudit module de fonction (MF).

6. Dispositif selon l'une des revendications 1 à 5, comprenant également au moins un deuxième moyen d'activation dudit premier module de sélection (MS1).

7. Microcontrôleur comprenant au moins un dispositif multifonctionnel temporisateur/compteur d'évènements (TIMER) selon l'une quelconque des revendications 1 à 6.

8. Microcontrôleur selon la revendication 7, dans lequel ledit signal de synchronisation est un signal interne ou externe audit microcontrôleur.

9. Procédé de mise en oeuvre d'un dispositif multifonctionnel temporisateur/compteur d'évènements (TIMER) comprenant au moins :
- un compteur (CNT) piloté par un signal d'horloge (CLK),
- un registre de compteur (REG_CNT) contenant un nombre binaire représentatif d'un état dudit compteur, et
- un registre de contrôle (REG_CTRL) comprenant au moins un nombre binaire destiné à au moins définir un comportement dudit compteur (CNT),
**caractérisé en ce que** selon un premier mode de fonctionnement (SLAVE) et pendant au moins un premier cycle d'horloge, un module de fonction (MF) exécute des étapes de :
- réception d'un signal de synchronisation,
- réception d'un signal de commande de fonction (TMS), et
- modification dudit nombre binaire en fonction dudit signal de synchronisation et dudit signal de commande de fonction (TMS), le signal de synchronisation servant au moins à cadencer ou à déclencher le compteur (CNT).

10. Procédé selon la revendication 9, dans lequel, selon ledit premier mode de fonctionnement (SLAVE) et pendant au moins ledit premier cycle d'horloge, un premier module de sélection (MS1) exécute des étapes de :
- réception d'une pluralité de signaux de synchronisation,
- réception d'un premier signal de commande de sélection (TS),
- sélection dudit signal de synchronisation parmi ladite pluralité de signaux de synchronisation, en fonction dudit premier signal de commande de sélection (TS), et
- envoi dudit signal de synchronisation vers ledit module de fonction (MF).

11. Procédé selon la revendication 9 ou 10, dans lequel, selon un deuxième mode de fonctionnement (MASTER) et pendant au moins ledit premier cycle d'horloge, un deuxième module de sélection (MS2) exécute des étapes de :
- réception d'une pluralité de signaux représentatifs, pour certains au moins, d'un état dudit compteur (CNT), et d'une pluralité de signaux définissant, pour certains au moins, ledit comportement dudit compteur (CNT),
- réception d'un deuxième signal de commande de sélection (MMS),
- sélection d'un signal parmi ladite pluralité de signaux, en fonction dudit deuxième signal de commande de sélection (MMS), et
- envoi dudit signal sélectionnée vers une sortie de synchronisation (TRGO) dudit deuxième module de sélection (MS2).

12. Procédé selon l'une des revendications 9 à 11, dans lequel, pendant au moins un deuxième cycle d'horloge et à partir d'un évènement dudit signal d'horloge (CLK), ledit compteur (CNT) exécute ledit comportement défini par ledit nombre binaire.

13. Procédé selon l'une des revendications 9 à 12, comprenant une étape d'activation dudit premier mode de fonctionnement (SLAVE).

14. Procédé selon l'une des revendications 9 à 13, comprenant une étape d'activation dudit deuxième mode de fonctionnement (MASTER).

15. Procédé selon la revendication 9, dans lequel, ledit signal de synchronisation est un signal représentatif d'au moins un état d'un compteur (CNT) d'un deuxième dispositif multifonctionnel temporisateur/compteur d'évènements ou un signal définissant au moins un comportement dudit compteur (CNT) dudit deuxième dispositif.

16. Procédé selon la revendication 10, dans lequel, ladite pluralité de signaux de synchronisation comprend au moins un signal représentatif d'au moins un état d'un compteur (CNT) d'un deuxième dispositif multifonctionnel temporisateur/compteur d'évènements ou un signal définissant au moins un comportement dudit compteur (CNT) dudit deuxième dispositif.

17. Procédé selon la revendication 15 ou 16, dans lequel, pendant au moins un deuxième cycle d'horloge et à partir d'un évènement dudit signal d'horloge (CLK), ledit compteur (CNT) dudit premier dispositif exécute ledit comportement défini par ledit premier nombre binaire, et ledit compteur (CNT) dudit deuxième dispositif exécute un comportement défini par un deuxième nombre binaire contenu dans un registre de contrôle dudit deuxième dispositif.

18. Procédé selon la revendication 15 à 17, comprenant une étape d'activation dudit premier mode de fonctionnement (SLAVE).

19. Procédé selon l'une des revendications 15 à 18, comprenant une étape d'activation dudit deuxième mode de fonctionnement (MASTER).

20. Procédé selon l'une des revendications 15 à 19, dans lequel un module de fonction (MF) dudit deuxième dispositif reçoit un signal représentatif dudit état dudit compteur dudit premier dispositif ou un signal définissant ledit comportement dudit compteur dudit premier dispositif.

21. Procédé selon l'une des revendications 15 à 18, dans lequel un premier module de sélection (MS1) dudit deuxième dispositif reçoit un signal représentatif d'un état dudit compteur dudit premier dispositif ou un signal définissant ledit comportement dudit compteur dudit premier dispositif.
